# FASCICULE DE BREVET EUROPEEN

(11) **EP 2 739 448 B1**
(45) Date de publication et mention de la délivrance du brevet: **15.07.2015**
(21) Numéro de dépôt: 12740992.8
(22) Date de dépôt: 31.07.2012
(51) Int. Cl.: B29B 11/16, B29C 70/24, B29C 70/48

(54) **PROCEDE DE FABRICATION D'UNE PIECE STRUCTURALE GENERALEMENT TRIANGULAIRE EN MATERIAU COMPOSITE**
VERFAHREN ZUM HERSTELLEN EINES IM WESENTLICHEN DREIECKIGEN VERBUNDSTOFF-STRUKTURTEILS
PROCESS FOR MANUFACTURING A COMPOSITE, GENERALLY TRIANGULAR, STRUCTURAL PART

(30) Priorité: 01.08.2011 FR 1157053
(43) Date de publication de la demande: 11.06.2014
(73) Titulaire: Messier-Bugatti-Dowty, 78140 Vélizy-Villacoublay (FR)
(72) Inventeur: MASSON, Richard, 78140 Velizy Villacoublay (FR); GARNIER, Gildas, 78140 Velizy Villacoublay (FR)
(74) Mandataire: Parzy, Benjamin Alain
(86) Numéro de dépôt international: PCT/EP2012/064977
(87) Numéro de publication internationale: WO 2013/017603

(56) Documents cités:
- EP-A1- 0 056 351
- EP-A2- 0 073 648
- DE-A1-102009 047 491
- US-A- 5 665 451
- US-A1- 2006 121 809
- US-A1- 2009 163 100

## Description

L'invention concerne un procédé pour fabriquer en un matériau composite comprenant des fibres renforçantes telles que des fibres de carbone, une pièce structurale généralement triangulaire.

### ARRIERE PLAN DE L'INVENTION

L'invention concerne plus particulièrement la fabrication d'une pièce structurale du type comportant trois bras disposés en triangle en étant raccordés les uns aux autres par leurs extrémités.

Une telle pièce correspond par exemple à un élément de compas d'un atterrisseur auxiliaire d'aéronef, ou à un panneau de déploiement d'un tel atterrisseur auxiliaire.

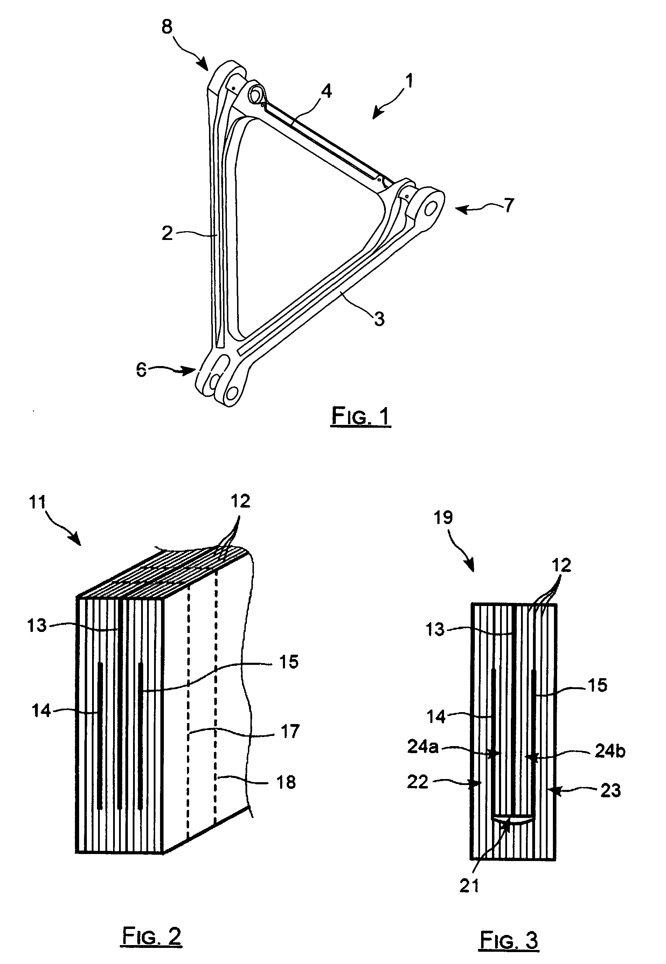

Un tel panneau de déploiement d'atterrisseur auxiliaire qui est représenté dans la figure 1 en y étant repéré par 1 comporte trois bras, repérés par 2, 3, et 4 qui sont raccordés les uns aux autres par leurs extrémités, et il comporte en outre, à chacun de ses sommets une chape, ces chapes étant repérées par 6, 7 et 8.

Le panneau qui est représenté dans la figure 1 est fabriqué à partir de matériaux métalliques, avec des opérations de type mise en forme, usinages et autres.

Les documents EP 0 056 351 et EP 0 073 648 divulguent un procédé général de fabrication d'un élément structural en matériau composite, comportant les opérations de :
- fabriquer, à partir d'un tissu tridimensionnel de fibres renforçantes, une préforme comportant des fentes traversantes;
- mettre en forme la préforme en la déployant;
- solidariser par piquage avec un autre élément;
- injecter de la résine dans cette préforme et polymériser cette résine.

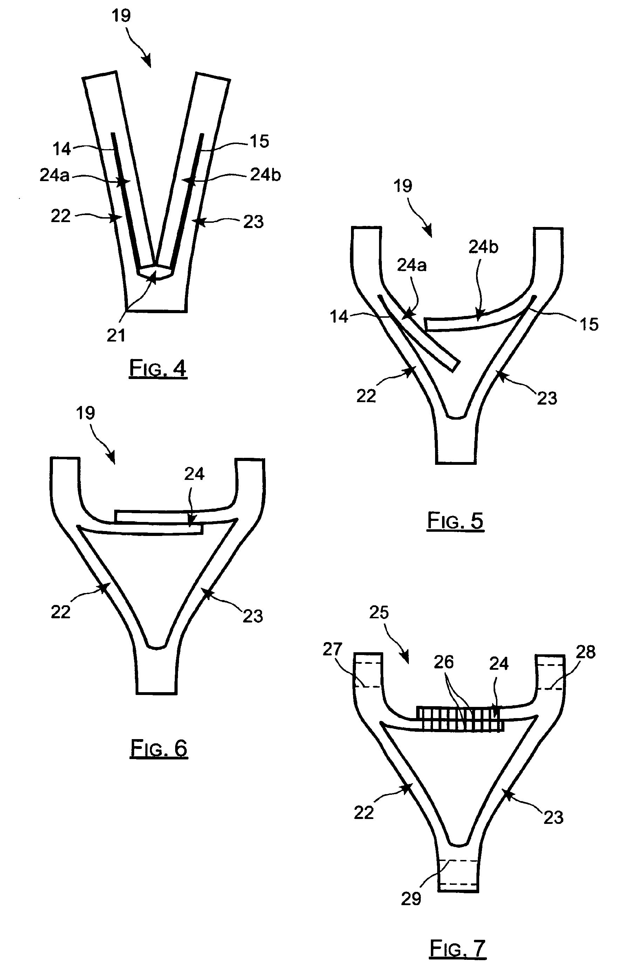

Lesdits documents décrivent respectivement dans les figures 7 à 13 et 10A à 10I, les types de configurations jugées réalisables par ce dit procédé. La présente application offre toutefois la particularité de réaliser une géométrie plus complexe que celles illustrées dans l'état de l'art qui nécessite également la réalisation d'une préforme comportant des fentes positionnées de façon particulière.

### OBJET DE L'INVENTION

Le but de l'invention est de fabriquer une pièce structurale généralement triangulaire telle qu'un élément de compas d'atterrisseur auxiliaire ou un panneau de déploiement d'un tel atterrisseur, en matériau composite pour un coût compétitif.

### RESUME DE L'INVENTION

A cet effet, l'invention a pour objet un procédé de fabrication d'un élément structural en matériau composite, comprenant trois bras agencés en triangle en étant reliés les uns aux autres par leurs extrémités respectives, comportant les opérations de :
- fabriquer, à partir d'un tissu tridimensionnel de fibres renforçantes, une préforme comportant des fentes traversantes délimitant deux bras et deux demi-bras tous parallèles et contigus deux à deux, chaque bras ayant une extrémité par laquelle il est raccordé à un demi-bras et une autre extrémité par laquelle il est raccordé à l'autre bras ;
- mettre en forme la préforme en la déployant et en réunissant ses deux demi-bras pour la configurer selon un triangle dont deux côtés correspondent aux deux bras de la préforme et dont le troisième côté correspond à la réunion des deux demi-bras de cette préforme ;
- solidariser des deux demi-bras l'un à l'autre par piquage de fibres renforçantes traversant les deux demi-bras ;
- injecter de la résine dans cette préforme et polymériser cette résine.

L'invention a également pour objet un procédé de fabrication d'un élément structural en matériau composite, comprenant trois bras agencés en triangle en étant reliés les uns aux autres par leurs extrémités respectives, comportant les opérations de :
- fabriquer, à partir d'un tissu tridimensionnel de fibres renforçantes, deux demi-préformes, comportant chacune des fentes traversantes délimitant un bras et un demi-bras parallèles et contigus qui sont raccordés l'un à l'autre par l'une de leurs extrémités, ainsi qu'un demi-pont raccordé au bras ;
- mettre en forme les demi-préformes en les déployant, et réunir d'une part les deux demi-bras des deux demi-préformes et d'autre part les deux demi-ponts des deux demi-préformes, pour configurer l'ensemble selon un triangle dont deux côtés correspondent aux deux bras raccordés par les demi-ponts et dont le troisième côté correspond à la réunion des deux demi-bras ;

- solidariser des deux demi-bras l'un à l'autre par piquage de fibres renforçantes traversant les deux demi-bras, et solidariser les deux demi-ponts par piquage de fibres renforçantes traversant ces deux demi-ponts ;
- une opération d'injection de résine dans les demi-préformes réunies et de polymérisation de cette résine.

L'invention a également pour objet un procédé tel que défini ci-dessus, dans lequel chaque préforme ou demi-préforme est constituée de couches de fibres transversales et longitudinales tissées entre elles de sorte que les fibres d'une direction s'entrelacent avec les fibres de plusieurs autres couches, et dans lequel chaque préforme ou demi-préforme comporte une ou plusieurs fentes traversantes correspondant chacune à deux couches contiguës dépourvues de fibres les entrelaçant l'une à l'autre dans une région prédéterminée, chacune de ces fentes traversantes étant obtenue directement lors du tissage du tissu tridimensionnel à partir duquel est fabriquée la préforme ou la demi-préforme.

L'invention a également pour objet un procédé tel que défini ci-dessus, dans lequel chaque préforme ou demi-préforme comporte une ou plusieurs fentes traversantes obtenue par découpe ou usinage d'une partie du tissu tridimensionnel à partir duquel est constituée cette préforme ou demi-préforme.

L'invention a également pour objet un procédé tel que défini ci-dessus, dans lequel chaque préforme ou demi-préforme est constituée à partir d'une tranche d'un tissu tridimensionnel, cette tranche étant obtenue par découpe selon un plan transversal à une direction principale de tissage du tissu tridimensionnel.

### BREVE DESCRIPTION DES FIGURES

La figure 1 est une vue d'ensemble d'un panneau triangulaire connu de type métallique destiné à équiper un atterrisseur auxiliaire d'aéronef ;
La figure 2 est un schéma montrant une pièce de tissu tridimensionnel représentée en perspective à partir de laquelle est fabriquée une préforme dans le procédé selon l'invention ;
La figure 3 est une représentation schématique d'une préforme tissée mise en oeuvre dans le procédé selon l'invention ;
La figure 4 est une représentation schématique de la préforme de la figure 3 en début de mise en forme dans le procédé selon l'invention ;
La figure 5 est une représentation schématique de la préforme des figures 3 et 4 en fin de mise en forme dans le procédé selon l'invention ;
La figure 6 est une représentation schématique de la préforme des figures 3 à 5 une fois qu'elle a été mise en forme pour constituer le panneau triangulaire ;
La figure 7 est une représentation schématique de la pièce triangulaire fabriquée conformément au procédé selon l'invention ;
La figure 8 est une représentation schématique montrant deux demi-préformes pour fabriquer une pièce triangulaire conformément à l'invention ;
La figure 9 est une représentation schématique du panneau fabriqué sur la base de deux demi-préformes ;
La figure 10 est une représentation schématique d'une variante de demi-préformes pouvant être utilisées dans le procédé selon l'invention.

### DESCRIPTION DETAILLEE DE L'INVENTION

L'idée à la base de l'invention est de prévoir une préforme en tissu tridimensionnel dans laquelle les différents bras du panneau sont délimités par différentes fentes, et de déployer cette préforme pour constituer la pièce triangulaire avant d'injecter et de polymériser la résine dans cette préforme.

La pièce de tissu tridimensionnel utilisée pour l'invention, qui est représentée en figure 2 en y étant repérée par 11 est constituée de fibres renforçantes tissées, telles que des fibres de carbone. Elle est constituée d'une série de couches de fibres renforçantes planes qui sont superposés en étant liés les unes aux autres.

Elle comporte plus particulièrement des couches de fibres transversales et longitudinales tissées entre elles de telle manière que les fibres d'une direction (transversale ou longitudinale) s'entrelacent avec les fibres de plusieurs autres couches, les différentes couches étant repérées par 12.

Comme visible dans la figure 2, cette pièce de tissu présente une section délimitée par un contour extérieur rectangulaire voire éventuellement trapézoïdal, et elle comporte également trois fentes traversantes, repérées par 13, 14 et 15, qui s'étendent parallèlement les unes aux autres.

Dans les figures 2 et 3 la section de cette pièce de tissu est présentée verticalement, c'est-à-dire que le grand côté du rectangle délimitant le contour externe de cette section, et qui correspond à la largeur de la pièce de tissu, s'étend verticalement. Le petit côté de ce contour, qui est orienté horizontalement dans les figures, correspond ainsi à l'épaisseur de la pièce de tissu.

D'une manière générale, cette pièce de tissu est fabriquée sur une longueur pouvant être importante, pour produire différentes préformes identiques en découpant cette pièce de tissu à intervalles réguliers le long de sa longueur. De telles découpes sont représentées en pointillés dans la figure 2 en y étant repérées par 17 et 18. Autrement dit, chaque préforme correspond à une tranche de la pièce de tissu tridimensionnel.

Chaque fente de la pièce de tissu 11 correspond à deux couches de fibres renforçantes contiguës qui ne sont pas liées l'une à l'autre sur une partie de la largeur de la pièce de tissu, et sur toute la longueur de cette pièce de tissu. Cette disposition, c'est-à-dire le fait que certaines paires de couches contiguës ne sont pas liées l'une à l'autre dans une région prédéterminée, est obtenue directement lors de l'opération de tissage c'est-à-dire lors de la fabrication de la pièce de tissu.

Une fois que cette pièce de tissu est prête, elle est découpée selon la ligne 17, c'est-à-dire selon un plan transversal à la direction générale de tissage de cette pièce, pour en extraire une tranche afin de constituer la préforme 19 représentée en figure 3. Dans un premier temps, la préforme comporte les trois fentes traversantes 13, 14 et 15 résultant du tissage, et une fente complémentaire est réalisée par découpe au jet d'eau ou bien par usinage, de manière à délimiter complètement les différents bras de la pièce triangulaire à fabriquer.

Comme visible dans la figure 3, la fente traversante 13 est une fente centrale s'étendant depuis un petit côté du contour rectangulaire de la préforme, en s'étendant parallèlement à ses longs côtés pour s'étendre sur une longueur correspondant sensiblement aux quatre cinquièmes de la longueur de ces longs côtés.

Les fentes 14 et 15 sont situées de part et d'autre de la fente centrale 13 en s'étendant parallèlement à celle-ci sur une longueur correspondant sensiblement aux deux tiers de celle des longs côtés, ces fentes 14 et 15 ne rejoignant pas les petits côtés du contour rectangulaire de la préforme.

Les trois fentes 13, 14, 15 comportent chacune une extrémité proche du petit côté du contour qui est opposé au petit côté dont part la fente centrale 13. Ces trois extrémités sont situées à même distance du petit côté en question, et elles sont réunies par une fente supplémentaire, repérée par 21 qui est réalisée par découpe ou par usinage, de façon complètement distincte de l'opération de tissage.

Cette opération de découpe ou d'usinage de la fente supplémentaire 21 est réalisée par exemple après découpe de la tranche de tissu selon la ligne 17 dans la figure 2.

Comme il ressort de la figure 3, la préforme 19 dont le contour est rectangulaire voire trapézoïdal, délimite ainsi les trois bras constituant la pièce à fabriquer. Le premier bras, repéré par 22, est délimité par la fente 14 et par le long bord le plus proche du contour externe. De manière analogue, le second bras, repéré par 23, est délimité par la fente 15 et par le long bord le plus proche du contour externe.

Un premier demi-bras, repéré par 24a est délimité par la fente centrale 13 et par la fente 14, et un second demi-bras 24b est délimité par la fente centrale 13 et par la fente 15. Comme expliqué plus bas, les demi-bras 24a et 24b sont destinés à être réunis et solidarisés l'un à l'autre pour constituer un unique bras 24.

Grâce aux fentes traversantes 13-15 et 21, le bras 22 présente une extrémité, à savoir l'extrémité supérieure dans les figures, par laquelle il est raccordé à l'extrémité supérieure du demi-bras 24a, et une autre extrémité, à savoir son extrémité inférieure dans les figures, par laquelle il est raccordé à l'extrémité inférieure du bras 23. De manière analogue, le bras 23 est raccordé au demi-bras 24b par son extrémité supérieure, et il est raccordé au bras 22 par son extrémité inférieure. Les demi-bras 24a et 24b ont chacun une extrémité libre qui est située au niveau de la fente découpée ou usinée 21.

Une fois que la préforme est prête, c'est-à-dire qu'elle correspond au schéma de la figure 3, elle est déployée, pour lui donner la forme de la pièce structurale triangulaire à fabriquer, ce déploiement qui est réalisé avec un outillage de mise en forme non représenté, correspond aux étapes représentées dans les figures 4 à 6.

Dans un premier temps, les deux branches principales de la préforme, c'est-à-dire la branche comportant les éléments 22 et 24a d'une part et la branche comprenant les éléments 23 et 24b d'autre part sont écartées l'une de l'autre, comme représenté en figure 4, ce qui correspond à écarter la fente 13 qui débouche dans le petit bord supérieur du contour de la section de préforme.

Ensuite, comme représenté en figure 5, le demi-bras 24a est écarté du bras 22, ce qui revient à écarter la fente 14, et le demi-bras 24b est écarté du bras 23 ce qui revient à écarter la fente 15.

Dans ces conditions, les demi-bras 24a et 24b sont rapprochés l'un de l'autre pour se longer mutuellement en étant en appui l'un contre l'autre, de manière à former un unique bras 24, comme représenté schématiquement en figure 6. La préforme est alors conformée en triangle, les bras 22 et 23 correspondant à deux côtés de ce triangle, le troisième côté étant formé par le bras 24 qui correspond à la réunion des demi-bras 24a et 24b.

Au stade de la figure 6, la préforme est maintenue par l'outillage de mise en forme qui a permis de la configurer en triangle. On procède alors à une opération de couture par piquage pour solidariser le demi-bras 24a au demi-bras 24b, ce qui est réalisé en piquant, avec un outillage spécialisé, des fibres renforçantes 26 de telle manière que chaque fibre piquée traverse les deux demi-bras 24a et 24b qui se longent mutuellement sur une portion de leurs longueurs.

Lorsque les deux demi-bras 24a et 24b ont été solidarisés l'un à l'autre par piquage, la préforme agencée en triangle est démontée de l'outillage de mise en forme pour être installée dans un moule non représenté, en vue de procéder à l'injection et à la polymérisation de la résine.

Une fois que la préforme conformée en triangle est en place dans le moule, un cycle de chauffe est enclenché, et l'on procède à l'injection de résine, puis à sa polymérisation par chauffage.

Lorsque la pièce brute est prête, c'est-à-dire lorsque la résine est polymérisée et que la pièce a été extraite du moule, on procède à différentes opérations d'usinages correspondant sensiblement à sa finition, pour aboutir à la pièce 25 représentée en figure 7.

Ces opérations d'usinage comportent entre autres la réalisation de perçages 27, 28, 29 à chaque sommet du triangle que forme la pièce, pour former les chapes par lesquelles cette pièce sera ultérieurement solidarisée à d'autres composants mécaniques. Complémentairement, une bague formant palier est montée dans chaque perçage ou chape ainsi formée.

Plus particulièrement, le perçage 27 est réalisé dans la portion de matière par laquelle le bras 22 est raccordé au demi-bras 24a, le perçage 28 est réalisé dans la portion de matière par laquelle le bras 23 est raccordé au demi-bras 24b. Le perçage 29 est réalisé dans la portion de matière raccordant le bras 22 au bras 23. Comme visible dans les figures, les trois portions de matière dans lesquelles sont réalisés les perçages sont situées sensiblement au delà des sommets du triangle défini par les trois bras 22, 23 et 24. Ces trois perçages sont orientés parallèlement les uns aux autres, les perçages 27 et 28 étant alignés l'un avec l'autre.

L'invention n'est pas limitée à la géométrie de préforme de la figure 3, et d'autres géométries peuvent également être adaptées, dès lors qu'elles peuvent se déployer pour être agencées en forme de pièce triangulaire à trois bras.

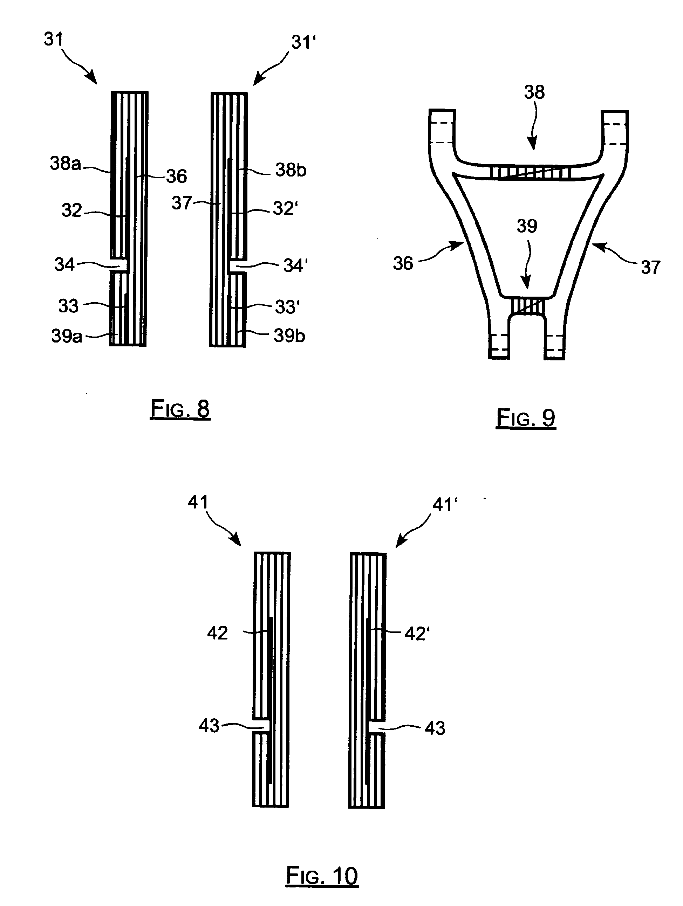

Dans les exemples des figures 8 et 9, la pièce généralement triangulaire est fabriqué à partir de deux demi-préformes qui sont complémentaires, et en l'espèce symétriques l'une de l'autre.

Ces demi-préformes sont, tout comme la préforme de la figure 3, issues de pièces de tissu tridimensionnel tissé de manière à former différentes fentes traversantes pour délimiter les bras de la pièce à former. Chaque demi-préforme est là aussi est réalisée en découpant une tranche de la pièce de tissu, avant de réaliser dans cette tranche comportant une ou plusieurs fentes traversantes issues de tissage, une encoche ou fente traversante supplémentaire par découpe ou par usinage.

Dans l'exemple de la figure 8, la demi-préforme 31 a un contour généralement rectangulaire, et elle comporte une fente traversante centrale 32, résultant de tissage, orientée parallèlement aux longs côtés du contour de demi-préforme et s'étendant sur une longueur correspondant sensiblement aux deux tiers de la longueur de ces longs côtés.

Cette demi-préforme 31 comporte une autre fente traversante, repérée par 33, qui s'étend dans le prolongement de la fente centrale 32 en étant espacée de celle-ci, et en débouchant dans un petit côté du contour rectangulaire de la demi-préforme.

Additionnellement à ces fentes 32 et 33 résultant de tissage, on réalise par découpe ou par usinage une fente ou encoche supplémentaire par laquelle l'une des extrémités de la fente centrale 32 débouche dans un long bord du contour rectangulaire de la demi-préforme, cette fente ou encoche traversante additionnelle étant repérée par 34.

De manière analogue, la demi-préforme 31' comporte elle aussi une fente traversante centrale 32', une autre fente 33' obtenues directement par l'opération de tissage, et une fente ou encoche additionnelle 34' réalisée par découpe ou usinage après tissage.

Selon cette configuration, les fentes 32 et 33 délimitent avec l'un des bords longs du contour rectangulaire un premier bras 36, la fente 32 délimite une portion du bord long opposé un premier demi-bras 38a, et la fente 33 délimite avec une autre portion du bord long opposé un demi-pont de raccordement 39a. De manière analogue, les fentes correspondantes 32' et 33' délimitent l'autre bras 37, l'autre demi-bras 38b et l'autre demi-pont de raccordement 39b.

Comme visible dans la figure 8, le demi-bras 38a est raccordé par son extrémité au bras 36, et le demi-pont 39a est raccordé par son extrémité supérieure à une région inférieure du bras 36 coïncidant sensiblement avec la fente 34'. Il en va de même de la préforme 31'.

Une fois que ces deux demi-préformes 31 et 31' ont été obtenues, elles sont déployées en vis-à-vis l'une de l'autre avec des outils de mise en forme non représentés. Ce déploiement donne lieu, de manière analogue au cas des figures 4 à 6, réunir les demi-bras 38a et 38b afin de former un unique bras 38, et pour également réunir les demi-ponts 39a et 39b afin de constituer un pont 39 réunissant les extrémités inférieures des bras 36 et 37, conformément à la disposition montrée en figure 10.

Les deux demi-bras 38a et 38b sont ensuite solidarisés l'un à l'autre par piquage, et de façon analogue, les demi-ponts 39a et 39b sont aussi réunis par piquage.

L'ensemble est ensuite installé dans un moule à injection pour y injecter la résine et polymériser cette résine. La pièce brute est ensuite extraite pour procéder à différentes opérations d'usinage et/ou de finition.

D'autre formes de demi-préformes sont également possibles, comme par exemple celles qui sont représentées dans la figure 10. Dans ce cas, chaque demi-préforme 41, 41' est là aussi issue d'un tissu tridimensionnel tissé pour comporter une fente centrale 42, 42', et une opération d'usinage ou de découpe est ensuite assurée pour réaliser une fente ou encoche complémentaire 43, 43'. Comme dans le cas des figures 8 et 9, ces formes permettent de définir deux bras ainsi que deux demi-bras et deux demi-ponts destinés à être assemblés les uns aux autres selon une configuration identique à celle de la figure 9.

Comme visible notamment dans l'exemple de la figure 9 les bras et les éventuels demi-ponts utilisés pour raccorder une portion de préforme à l'autre ou pour raccorder deux demi-préformes l'une à l'autre, sont avantageusement prévus en ayant des formes biseautées, de sorte que leur réunion constitue une portion ayant une épaisseur sensiblement constante.

## Revendications

1. Procédé de fabrication d'un élément structural (25) en matériau composite, comprenant trois bras (22, 23, 24) agencés en triangle en étant reliés les uns aux autres par leurs extrémités respectives, comportant les opérations de :
- fabriquer, à partir d'un tissu tridimensionnel de fibres renforçantes, une préforme (19) comportant des fentes traversantes (13, 14, 15, 21) délimitant deux bras (22, 23) et deux demi-bras (24a, 24b) tous parallèles et contigus deux à deux, chaque bras (22, 23) ayant une extrémité par laquelle il est raccordé à un demi-bras (24a, 24b) et une autre extrémité par laquelle il est raccordé à l'autre bras (22, 23) ;
- mettre en forme la préforme (19) en la déployant et en réunissant ses deux demi-bras (24a, 24b) pour la configurer selon un triangle dont deux côtés correspondent aux deux bras (22, 23) de la préforme (19) et dont le troisième côté correspond à la réunion des deux demi-bras (24a, 24b) de cette préforme ;
- solidariser des deux demi-bras (24a, 24b) l'un à l'autre par piquage de fibres renforçantes traversant les deux demi-bras (24a, 24b) ;
- injecter de la résine dans cette préforme (19) et polymériser cette résine.

2. Procédé de fabrication d'un élément structural en matériau composite, comprenant trois bras (36, 37, 38) agencés en triangle en étant reliés les uns aux autres par leurs extrémités respectives, comportant les opérations de :
- fabriquer, à partir d'un tissu tridimensionnel de fibres renforçantes, deux demi-préformes (31, 31' ; 41, 41'), comportant chacune des fentes traversantes (32, 32' , 33, 33'; 42, 42') délimitant un bras (36, 37) et un demi-bras (39a, 39b) parallèles et contigus qui sont raccordés l'un à l'autre par l'une de leurs extrémités, ainsi qu'un demi-pont (39a, 39b) raccordé au bras (36, 37) ;
- mettre en forme les demi-préformes (31, 31' ; 41, 41') en les déployant, et réunir d'une part les deux demi-bras (38a, 38b) des deux demi-préformes (31, 31' ; 41, 41') et d'autre part les deux demi-ponts (39a, 39b) des deux demi-préformes (31, 31' ; 41, 41'), pour configurer l'ensemble selon un triangle dont deux côtés correspondent aux deux bras (36, 37) raccordés par les demi-ponts (39a, 39b) et dont le troisième côté correspond à la réunion (38) des deux demi-bras (38a, 38b) ;
- solidariser des deux demi-bras (38a, 38b) l'un à l'autre par piquage de fibres renforçantes traversant les deux demi-bras (38a, 38b), et solidariser les deux demi-ponts (39a, 39b) par piquage de fibres renforçantes traversant ces deux demi-ponts (39a, 39b) ;
- une opération d'injection de résine dans les demi-préformes (31, 31' ; 41, 41') réunies et de polymérisation de cette résine.

3. Procédé selon la revendication 1 ou 2, dans lequel chaque préforme (19) ou demi-préforme (31, 31' ; 41, 41') est constituée de couches (12) de fibres transversales et longitudinales tissées entre elles de sorte que les fibres d'une direction s'entrelacent avec les fibres de plusieurs autres couches (12), et dans lequel chaque préforme (19) ou demi-préforme (31, 31' ; 41, 41') comporte une ou plusieurs fentes traversantes (13, 14, 15 ; 32, 33, 32', 33' ; 42, 42') correspondant chacune à deux couches contiguës (12) dépourvues de fibres les entrelaçant l'une à l'autre dans une région prédéterminée, chacune de ces fentes traversantes (13, 14, 15 ; 32, 33, 32', 33' ; 42, 42') étant obtenue directement lors du tissage du tissu tridimensionnel à partir duquel est fabriquée la préforme (19) ou la demi-préforme (31, 31' ; 41, 41').

4. Procédé selon la revendication 1 ou 2, dans lequel chaque préforme (19) ou demi-préforme (31, 31' ; 41, 41') comporte une ou plusieurs fentes traversantes (21 ; 34, 34' ; 43, 43') obtenue par découpe ou usinage d'une partie du tissu tridimensionnel à partir duquel est constituée cette préforme (19) ou demi-préforme (31, 31' ; 41, 41').

5. Procédé selon la revendication 1 ou 2, dans lequel chaque préforme (19) ou demi-préforme (31, 31' ; 41, 41') est constituée à partir d'une tranche d'un tissu tridimensionnel, cette tranche étant obtenue par découpe selon un plan transversal à une direction principale de tissage du tissu tridimensionnel.

## Patentansprüche

1. Verfahren zum Herstellen eines Strukturteils (25) aus einem Verbundwerkstoff, umfassend drei Arme (22, 23, 24), die in einem Dreieck angeordnet sind, indem sie über ihre jeweiligen Enden miteinander verbunden sind, umfassend die Schritte:
- Herstellen eines Vorformlings (19) aus einem dreidimensionalen Gewebe aus verstärkten Fasern, wobei der Vorformling (19) Durchgangsschlitze (13, 14, 15, 21) umfasst, die zwei Arme (22, 23) und zwei Halbarme (24a, 24b) begrenzen, die alle parallel und paarweise benachbart sind, wobei jeder Arm (22, 23) ein Ende hat, über das er an einem Halbarm (24a, 24b) befestigt ist, sowie ein anderes Ende, über das er an dem anderen Arm (22, 23) befestigt ist,
- Formen des Vorformlings (19), indem man ihn auseinander faltet und man seine beiden Halbarme (24a, 24b) zusammenfügt, um sie gemäß einem Dreieck zu konfigurieren, von dem zwei Seiten den beiden Armen (22, 23) des Vorformlings (19) entsprechen und von dem die dritte Seite der Zusammenfügung der beiden Halbarme (24a, 24b) dieses Vorformlings entspricht,
- Verbinden der beiden Halbarme (24a, 24b) miteinander durch Heften von verstärkten Fasern, die die beiden Halbarme (24a, 24b) durchsetzen,
- Einspritzen von Harz in diesen Vorformling (19) und Polymerisieren dieses Harzes.

2. Verfahren zum Herstellen eines Strukturteils aus einem Verbundwerkstoff, umfassend drei Arme (36, 37, 38), die in einem Dreieck angeordnet sind, indem sie über ihre jeweiligen Enden miteinander verbunden sind, umfassend die Schritte:
- Herstellen von zwei Halbvorformlingen (31, 31'; 41, 41') aus einem dreidimensionalen Gewebe aus verstärkten Fasern, wobei die Halbvorformlinge jeweils Durchgangsschlitze (32, 32', 33, 33'; 42, 42') umfassen, die einen Arm (36, 37) und einen Halbarm (39a, 39b) begrenzen, die parallel und benachbart und über eines ihrer Enden miteinander verbunden sind, sowie eine Halbbrücke (39a, 39b), die mit dem Arm (36, 37) verbunden ist,
- Formen der Halbvorformlinge (31, 31'; 41, 41'), indem man sie auseinander faltet und Zusammenfügen einerseits der beiden Halbarme (38a, 38b) der beiden Halbvorformlinge (31, 31'; 41, 41') und andererseits der beiden Halbbrücken (39a, 39b) der beiden Halbvorformlinge (31, 31'; 41, 41'), um das Ganze gemäß einem Dreieck zu konfigurieren, von dem zwei Seiten den beiden Armen (36, 37) entsprechen, die über die Halbbrücken (39a, 39b) verbunden sind, und von dem die dritte Seite der Zusammenfügung (38) der beiden Halbarme (38a, 38b) entspricht,
- Befestigen der beiden Halbarme (38a, 38b) miteinander durch Heften von verstärkten Fasern, die die beiden Halbarme (38a, 38b) durchsetzen, und Verbinden der beiden Halbbrücken (39a, 39b) durch Heften von verstärkten Fasern, die diese beiden Halbbrücken (39a, 39b) durchsetzen,
- einen Einspritzvorgang zum Einspritzen von Harz in die zusammengefügten Halbvorformlinge (31, 31'; 41, 41') und Polymerisation dieses Harzes.

3. Verfahren nach Anspruch 1 oder 2, wobei jeder Vorformling (19) oder Halbvorformling (31, 31'; 41, 41') aus Schichten (12) von Quer- und Längsfasern gebildet ist, die derart miteinander verwebt sind, dass die Fasern einer Richtung sich mit den Fasern mehrerer anderer Schichten (12) verflechten, und wobei jeder Vorformling (19) oder Halbvorformling (31, 31'; 41, 41') einen oder mehrere Durchgangsschlitze (13, 14, 15; 32, 33, 32', 33'; 42, 42') umfasst, die jeweils zwei benachbarten Schichten (12) entsprechen, die in einem vorgegebenen Bereich frei von Fasern sind, die sie miteinander verflechten, wobei jeder dieser Durchgangsschlitze (13, 14, 15; 32, 33, 32', 33'; 42, 42') direkt beim Weben des dreidimensionalen Gewebes erhalten wird, aus dem der Vorformling (19) oder der Halbvorformling (31, 31'; 41, 41') hergestellt wird.

4. Verfahren nach Anspruch 1 oder 2, wobei jeder Vorformling (19) oder Halbvorformling (31, 31'; 41, 41') einen oder mehrere Durchgangsschlitze (21; 34, 34'; 43, 43') umfasst, die durch Schneiden oder maschinelle Bearbeitung eines Teils des dreidimensionalen Gewebes erhalten werden, aus dem dieser Vorformling (19) oder Halbvorformling (31, 31'; 41, 41') gebildet ist.

5. Verfahren nach Anspruch 1 oder 2, wobei jeder Vorformling (19) oder Halbvorformling (31, 31'; 41, 41') aus einer Scheibe eines dreidimensionalen Gewebes gebildet ist, wobei diese Scheibe durch Schneiden in einer Ebene quer zu einer Hauptwebrichtung des dreidimensionalen Gewebes erhalten wird.

## Claims

1. A method of fabricating a structural element (25) out of composite material, the element comprising three arms (22, 23, 24) arranged in a triangle and connected to one another via their respective ends, the method comprising the operations of:
· using a fabric three-dimensionally woven from reinforcing fibers to fabricate a preform (19) having through slots (13, 14, 15, 21) defining two arms (22, 23) and two half-arms (24a, 24b) that are all parallel and contiguous in pairs, each arm (22, 23) having one end whereby it is connected to a half-arm (24a, 24b) and another end whereby it is connected to the other arm (22, 23) ;
· shaping the preform (19) by deploying it and by uniting its two half-arms (24a, 24b) to give it a triangle configuration with two sides corresponding to the two arms (22, 23) of the preform (19) and with its third side corresponding to uniting the two half-arms (24a, 24b) of the preform;
· securing together the two half-arms (24a, 24b) by stitching reinforcing fibers through both half-arms (24a, 24b); and
· injecting resin into the preform (19) and polymerizing the resin.

2. A method of fabricating a structural element out of composite material, the element comprising three arms (36, 37, 38) arranged in a triangle and connected to one another via their respective ends, the method comprising the operations of:
· using a fabric three-dimensionally woven from reinforcing fibers to fabricate two half-preforms (31, 31'; 41, 41'), each having through slots (32, 32', 33, 33'; 42, 42') defining an arm (36, 37) and a half-arm (39a, 39b) that are parallel and contiguous and that are connected together at one of their ends, and also a half-bridge (39a, 39b) connected to the arm (36, 37);
· shaping the half-preforms (31, 31'; 41, 41') by deploying them and uniting firstly the two half-arms (38a, 38b) of the two half-preforms (31, 31'; 41, 41') and also uniting the two half-bridges (39a, 39b) of the two half-preforms (31, 31'; 41, 41') in order to give the assembly a triangle configuration with two sides corresponding to the two arms (36, 37) connected together by the half-bridges (39a, 39b), and with its third side corresponding to uniting (38) the two half-arms (38a, 38b);
· securing together the two half-arms (38a, 38b) by stitching reinforcing fibers through both half-arms (38a, 38b), and securing the two half-bridges (39a, 39b) by stitching reinforcing fibers through both half-bridges (39a, 39b); and
· an operation of injecting resin into the united half-preforms (31, 31'; 41, 41') and polymerizing the resin.

3. A method according to claim 1 or claim 2, wherein each preform (19) or half-preform (31, 31'; 41, 41') is made up of layers (12) of transverse and longitudinal fibers that are woven together in such a manner that the fibers in one direction are interlinked with the fibers of a plurality of layers (12), and wherein each preform (19) or half-preform (31, 31'; 41, 41') has one or more through slots (13, 14, 15; 32, 33, 32', 33'; 42, 42') each corresponding to two contiguous layers (12) having no fibers interlinking them in a predetermined region, each of these through slots (13, 14, 15; 32, 33, 32', 33'; 42, 42') being obtained directly during the weaving of the three-dimensional fabric from which the preform (19) or the half-preform (31, 31'; 41, 41') is fabricated.

4. A method according to claim 1 or claim 2, wherein each preform (19) or half-preform (31, 31'; 41, 41') comprises one or more through slots (21; 34, 34'; 43, 43') obtained by cutting or machining a portion of the three-dimensional fabric from which the preform (19) or half-preform (31, 31'; 41, 41') is made.

5. A method according to claim 1 or claim 2, wherein each preform (19) or half-preform (31, 31'; 41, 41') is made from a strip of a three-dimensional fabric, the strip being obtained by cutting the three-dimensional fabric in a plane extending transversely to a main weaving direction of the three-dimensional fabric.
